# EUROPEAN PATENT APPLICATION

(11) **EP 4 819 536 A1**
(43) Date of publication of application: **07.10.2026**
(21) Application number: 25167466.9
(22) Date of filing: 31.03.2025
(51) Int. Cl.: H04L 9/32

(54) **METHOD FOR PROVING AUTHENTICITY OF ONE-TIME SIGNATURE BASED ON SYMMETRIC CRYPTOGRAPHY**

(71) Applicant: Siemens Aktiengesellschaft, 80333 München (DE)
(72) Inventor: Fries, Steffen, 85598 Baldham (DE); Maftun, Aliza, 81247 München (DE); Safieh, Malek, 81539 München (DE)
(74) Representative: Siemens Patent Attorneys

(57) **Abstract**

The invention provides a method for proving authenticity of a one-time signature of data of a performance-limited client towards a recipient of the data. A server is consulted that shares a joint secret (sk1) with the client (CL). A public key (PK) of the one-time signature is shared among the server (SE) and the client (CL) while being integrity protected using a symmetric cryptographic algorithm based on the joint secret (sk1). The server (SE) verifies the integrity of the public key (PK) of the one-time signature using the joint secret (sk1) and proves the validity of the public key (PK) to the recipient (RE).

## Description

The invention relates to methods for proving the authenticity of digital signatures, and more particularly to a method for proving the authenticity of a symmetric one-time signature using a trusted server and hash-based cryptography. Digital signatures are widely used in modern computing systems to verify the authenticity and integrity of data. In industrial and embedded systems, resource constraints often limit the use of computationally intensive asymmetric cryptography. Many devices rely on symmetric cryptography for security functionalities due to its lower computational requirements.

Authentication and authenticity provide an enhanced level of trust, since authenticity allows for tracing back the origin of data to a trusted entity.

One-time signature (OTS) schemes offer an alternative approach to digital signatures. These schemes allow a private key to be used for signing only once, providing strong security guarantees. However, the single-use nature of OTS keys introduces challenges in key management and distribution.

Existing protocols for authentication and authorization, such as Kerberos and OAuth, typically involve multiple parties and, as in case of OAuth, rely on a combination of symmetric and asymmetric cryptographic operations. While these protocols are well-established, they may not be optimally suited for resource-constrained devices or scenarios requiring post-quantum cryptographic security. Time-based authentication protocols like TESLA provide efficient solutions for multicast scenarios but require at least loose time synchronization between senders and receivers. In addition, they require management of hash-chains and incorporation into the actual application. Adapting such protocols for different use cases or device capabilities can be complex.

Hash-based signature schemes have gained attention as potential post-quantum cryptographic solutions. These schemes rely primarily on the security of cryptographic hash functions. However, integrating hash-based signatures into existing security protocols and infrastructure presents challenges, particularly for devices with limited computational resources.

It is therefore the object of the present invention to provide a method for proving the authenticity of symmetric one-time signatures that overcomes one or more of the problems associated with existing solutions.

This object of the present invention is solved with a method for proving authenticity of a symmetric one-time signature of data of a performance-limited client towards a recipient of the data with the features contained in claim 1. Advantageous aspects of the invention are contained in the subsequent dependent claims, the following description and the drawing.

The method for proving authenticity of a symmetric one-time signature of data of a performance-limited client towards a recipient of the data according to the invention includes: consulting a server that shares a joint secret with the client; sharing a public key of the one-time signature among the server and the client while being integrity protected using a symmetric cryptographic algorithm based on the joint secret; utilizing the server for verifying the integrity of the public key of the one-time signature using the joint secret; and using the server for proving the validity of the public key to the recipient.

This method allows for efficient authentication of data from performance-limited clients that may not be capable of performing complex asymmetric cryptographic operations. By utilizing a trusted server and pre-shared secrets, the method provides a secure way to apply one-time signatures without requiring significant computational resources on the client side. The method in its formulation above is described from the client's perspective. The very same method may be alternatively and advantageously also described from the server's perspective.

In this formulation, the method for proving authenticity of a symmetric one-time signature of data of a performance-limited client towards a recipient of the data according to the invention includes using a joint secret with the client is used and sharing a public key of the one-time signature with the client while being integrity protected using a symmetric cryptographic algorithm based on the joint secret. According to this aspect of the invention, the integrity of the public key of the one-time signature is verified using the joint secret and the validity of the public key is subjected to proof to the recipient.

Also this aspect of the invention allows for efficient authentication of data from performance-limited clients that may not be capable of performing complex asymmetric cryptographic operations as described for the client's perspective above.

Advantageously symmetric cryptographic algorithms as used in the method according to the invention can be easily migrated towards post quantum security, particularly by doubling the key size of some algorithms. Using the method according to the invention, clients only need symmetric one-time signatures, such as hash-based signatures. This enables easier migration towards post quantum security. Advantageously, also hash-based cryptography may be easily migrated towards post quantum security.

Advantageously, the validity of the public key of the one-time signature and the integrity of the data using this public key may be checked at different times by the recipient. The order and the time of both checks may differ, since in the end, only the successful check of both the validity and the integrity safely guarantees the authenticity of the data.

Additionally, the Recipient can then verify hash-based one-time signatures of the signed data with the help of the public key of the one-time signature.

In another advantageous aspect of the method according to the invention, the public key of the one-time signature is transmitted to the server and/or received by the server using a symmetric cryptographic algorithm based on the joint secret, particularly a symmetric signature.

This aspect enhances the security of the communication between the client and the server by protecting the integrity of the public key during transmission using efficient symmetric cryptography.

In another advantageous aspect of the method according to the invention, the public key of the one-time signature is transmitted from the server to the recipient while being integrity protected by a secure communication channel.

By using a secure channel for transmitting the public key from the server to the recipient, this aspect ensures that the key cannot be tampered with during transmission, further enhancing the overall security of the system.

In another advantageous aspect of the method according to the invention, the validity of the public key is subject to proof to the recipient by transmitting the public key to the recipient while being integrity protected with an asymmetric signature, particularly an asymmetric signature that is part of a public key infrastructure, particularly equipped with a X.509 certificate.

This aspect leverages existing public key infrastructure to provide a high level of trust in the validity of the public key, allowing the recipient to verify its authenticity using widely accepted standards. The performance-limited client, however, is not required to have capabilities for asymmetric cryptography.

In another advantageous aspect of the method according to the invention, the public key of the one-time signature is obtained from the joint secret particularly using a key derivation function and/or a hash-chain computation. Preferably, the key derivation function is used to obtain the private key of the one-time signature from the joint secret and/or the public key of the one-time signature is preferably obtained from the corresponding private key of the one-time signature using hash-chain computation. This may be particularly relevant for the computation carried out by the client and/or the server, respectively.

Using a hash-chain computation to derive the public key from the joint secret provides an efficient and secure way to generate key pairs, particularly suitable for performance-limited clients. Thus, even resource-constrained devices may be used as performance-limited clients.

In another advantageous aspect of the method according to the invention, the data are first concatenated with the public key of the one-time signature and preferably also an identifier of the consulted server and subsequently transmitted to the recipient.

This concatenation allows the recipient to verify the identity of the consulted server and the association of the data with the public key. This aspect of the invention thus makes the method according to the invention more robust against attacks by malicious parties interfering with the communication involved in the method.

In another advantageous aspect of the method according to the invention, a computation of a hash-chain to obtain the public key of the one-time signature is done in parallel to a signing with the one-time signature.

Performing these operations in parallel can significantly reduce the overall computational time required for the signature process, which is particularly beneficial for performance-limited clients.

In another advantageous aspect of the method according to the invention, a key pair comprising the public key and a secret key of the one-time signature is generated by the client.

Allowing the client to generate the key pair enhances security of the method from the client perspective by ensuring that the secret key never leaves the client device, reducing the risk of key compromise.

In another advantageous aspect of the method according to the invention, a key pair comprising the public key and a secret key of the one-time signature is generated by the server and transmitted to the client. Alternatively and also advantageously, instead of a key pair solely a secret key of the one-time signature may be generated by the server and transmitted to the client, In this case the corresponding public key of the one-time signature may be generated using hash-chain computation.

This aspect can be beneficial for extremely resource-constrained clients that may not have the capability to generate secure random numbers or perform complex key generation operations.

The method according to the invention is preferably computer-implemented, allowing for efficient and automated execution of the authentication process.

In a further preferred aspect of the method according to the invention, the proof of validity of a plurality of public keys, particularly a collection and/or list of public keys, of one-time signatures to the recipient is provided. In this case, the proven validity may be used for further communication. Advantageously, the usage of the public keys and the validation may be carried out at different times.

In a further preferred aspect of the method according to the invention, the method is used for proving authenticity of the symmetric one-time signature of the data of the performance-limited client towards a plurality of recipients of the data, and the
proof of validity of the public key is provided to the plurality of recipients and the proof of validity of the public key to the plurality of recipients is provided. In this aspect of the invention, the data signed with the one-time signature may be broadcasted to the plurality of recipients.

In a further aspect, a client configured to carry out the method according to the first aspect or a claim dependent on the first aspect is provided. Additionally, or alternatively, a server configured to carry out the method according to the second aspect or a claim dependent on the second aspect is provided.

These configured devices such as a client and/or a server enable a practical implementation of the method according to the invention.

In the following, the invention is explained in more details with the help of the accompanying drawing.

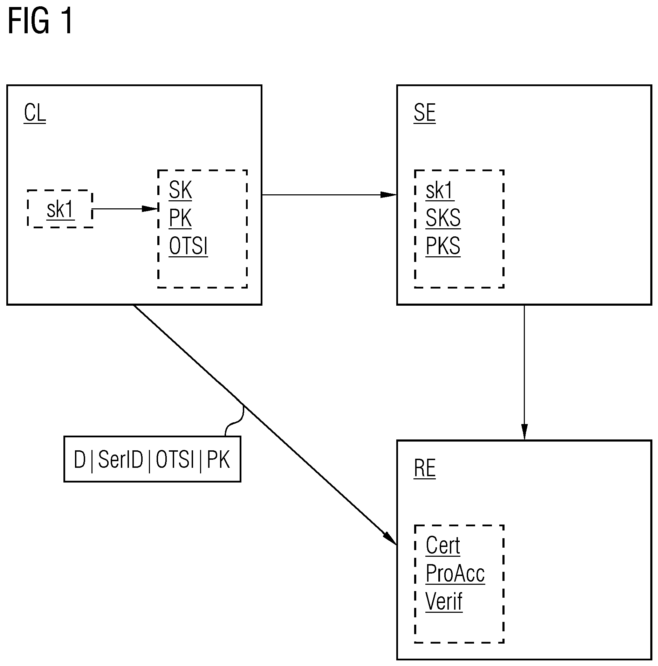

FIG 1 illustrates a block diagram of a system for proving authenticity of a symmetric one-time signature, according to aspects of the present disclosure.

Common reference numerals are used throughout the figures to indicate similar features.

FIG. 1 illustrates a system for proving authenticity of a symmetric one-time signature. The system comprises a Client CL, a Server SE, and a Receiver RE. The method in the depicted embodiments is computer-implemented. The Client CL and the Server SE are configured to carry out the methods described in the respective embodiments.

The Client CL is a performance-limited device capable of performing symmetric cryptographic operations. The Client CL stores a Pre-Shared Secret sk1 in an integrity and confidentiality protected memory. The Pre-Shared Secret sk1 is exchanged securely with the Server SE before the Client CL is put into operation. The Client CL is capable of computing hash functions and calculating hash-based One-Time Signatures OTSI.

The Client CL generates a key pair comprising a Hash-based Public Key PK and a Secret Key SK for a One-Time Signature OTSI. The Client CL generates a random number to generate the Secret Key SK for the hash-based One-Time Signature OTSI. The Client CL computes the Hash-based Public Key PK from the Secret Key SK using a hash-chain. The computation of the hash-chain to obtain the Hash-based Public Key PK is performed in parallel to the hash-based signing operation.

The depicted Server SE is a device with sufficient computational performance and a unique identifier SerID. The Server SE stores the Pre-Shared Secret sk1 shared with the Client CL in an integrity and confidentiality protected memory. The Server SE also owns an asymmetric key pair consisting of a Secret Key SKS and a Public Key PKS. The Server SE is capable of performing symmetric and asymmetric cryptographic operations, including digital signatures, authenticated encryption with associated data, typically abbreviated as AEAD, message authentication codes, conventionally denoted as MAC, and hashed message authentication codes, typically abbreviated as HMAC. The Server SE can generate cryptographic random numbers.

The Receiver RE receives integrity protected data D from the Client CL. The Receiver RE can perform all operations needed by the Server SE, such as symmetric and asymmetric cryptography. Additionally, the Receiver RE can verify hash-based one-time signatures OTSI of the signed data D with the help of the Hash-based Public Key PK.

The Server SE is in a first embodiment of a method according to the invention consulted to prove the authenticity of a symmetric One-Time Signature OTSI of the data D from the Client CL to the Receiver RE. In a second embodiment, also described here, the method may be seen from the perspective of the server SE, that performs the method according to the invention for the data D received from the client CL. Both embodiments are described within one and the same process, since both the Server SE and the Client CL interact for conducting the method according to the invention.

The Server SE has stored the Pre-Shared Secret sk1 that has been shared with the Client CL as described before. The Server SE verifies the integrity of the Hash-based Public Key PK of the One-Time Signature OTS using the Pre-Shared Secret sk1 and symmetric cryptography. The Hash-based Public Key PK is shared between the Server SE and the Client CL while being integrity protected using a symmetric cryptographic algorithm based on the Pre-Shared Secret sk1. The Server SE then proves the validity of the Hash-based Public Key PK to the Receiver RE.

The Client CL signs the data D using the One-Time Signature OTSI with the Secret Key SK. The Client CL then concatenates the signed data, the One-Time Signature OTSI, the Hash-based Public Key PK, and a Server Identity SerlD. The Client CL transmits this concatenated information D | SerID | OTSI | PK to the Receiver RE.

The Client CL protects the integrity of the Hash-based Public Key PK using the aforementioned symmetric algorithm with the Pre-Shared Secret sk1 before sending the Hash-based Public Key PK to the Server SE. The symmetric algorithm used for integrity protection may be an authenticated encryption with associated data (AEAD) algorithm, a message authentication code (MAC) algorithm, or a hashed message authentication code (HMAC) algorithm as described before.

The Hash-based Public Key PK is then transmitted to the Server SE using the symmetric cryptographic algorithm based on the Pre-Shared Secret sk1. The Server SE receives the Hash-based Public Key PK from the Client CL. The Server SE verifies the integrity of the Hash-based Public Key PK using the Pre-Shared Secret sk1.

After verifying the integrity of the Hash-based Public Key PK, the Server SE proves the validity of the Hash-based Public Key PK to the Receiver RE. The Server SE transmits the Hash-based Public Key PK to the Receiver RE while being integrity protected by a secure communication channel.

In an embodiment, the Server SE transmits the Hash-based Public Key PK to the Receiver RE while being integrity protected using an SSH or TLS protocol. Thus, the secure communication channel is realized with the SSH or TLS protocol.

In another embodiment, which in all other aspects of the invention corresponds to the embodiment described before, the Server SE transmits the Hash-based Public Key PK to the Receiver RE while being integrity protected with an Asymmetric Public Key PKS. The asymmetric key may be based on an asymmetric crypto algorithm, like a key encapsulation mechanism or a signature algorithm. The Asymmetric Public Key PKS is part of a public key infrastructure and is equipped with a Certificate for Asymmetric Public Key Cert.

The Server SE may sign multiple Hash-based Public Keys PK from different Clients CL and broadcast them to multiple Receivers RE. This allows the Server SE to efficiently prove the validity of multiple Hash-based Public Keys PK to multiple Receivers RE in a single operation.

The Server SE uses an Asymmetric Secret Key SKS to sign the Hash-based Public Key PK or multiple Hash-based Public Keys PK. The Asymmetric Secret Key SKS corresponds to the Asymmetric Public Key PKS used for verification by the Receivers RE.

The Receiver RE receives the signed data D from the Client CL, the One-Time Signature OTSI, the Hash-based Public Key PK, and the Server Identity SerlD in the concatenated fashion as described before. Upon receiving this information, the Receiver RE Provisionally Accepts ProvAcc the Hash-based Public Key PK within a provisional operation. During this operation, the Receiver RE verifies the One-Time Signature OTSI using the Hash-based Public Key PK before receiving validation from the Server SE.

The Receiver RE uses the Hash-based Public Key PK to verify the integrity of the received data and the One-Time Signature OTSI. The Receiver RE also verifies the integrity of the Server Identity SerlD, since in the depicted embodiment, the One-Time Signature OTSI was computed also over the Server Identity SerlD.

After the Receiver RE Provisionally Accepts ProvAcc the data, the Receiver RE awaits proof of the validity of the Hash-based Public Key PK from the Server SE with the corresponding Server Identity SerlD. The Receiver RE may actively request this proof from the Server SE or passively wait for the Server SE to provide it.

When the Receiver RE receives the proof from the Server SE, the Receiver RE performs a Verify the Hash-based Public Key PK Verif operation. This operation Verif involves verifying the integrity protection applied by the Server SE to the Hash-based Public Key PK. The integrity protection may be, as described before, in the form of an asymmetric signature or a secure communication channel such as TLS or SSH. If the Server SE used an asymmetric signature to protect the Hash-based Public Key PK, the Receiver RE verifies the signature using the Asymmetric Public Key PKS of the Server SE. The Receiver RE may use a Certificate Cert for the Asymmetric Public Key PKS to validate the Asymmetric Public Key PKS of the Server SE.

Once the Receiver RE successfully verifies the Hash-based Public Key PK, the Receiver RE can trust the authenticity of the received data and the One-Time Signature OTSI from the Client CL. This completes the process of proving the authenticity of the symmetric one-time signature to the Receiver RE.

In particular embodiments, the hash-based public key of the one-time signature OTSI is obtained from the pre-shared secret sk1 using a hash-chain computation. This method allows for efficient generation of the public key while maintaining the security properties of the one-time signature scheme.

In a further embodiment, the data D are additionally concatenated with an identifier of the intended receiver RE before transmitting to the receiver RE. This additional concatenation enhances the security of the communication by ensuring that the data D is intended for a specific receiver RE.

An alternative embodiment involves the Server SE generating the key pair comprising the hash-based Public Key PK and a Secret Key SK of the one-time signature OTSI. The Server then transmits this key pair PK, SK to the client CL. This approach reduces the computational burden on the Client CL while maintaining the security of the One-Time Signature OTSI scheme.

In yet another embodiment, the Client CL includes and protects a Receiver RE identity along with the hash-based Public Key PK when sending to the Server SE. This additional protection of the Receiver RE identity enhances the security and specificity of the communication between the Client CL and the Server SE.

In a further embodiment, the server generates the one-time signature key pair, protects it with the pre-shared secret, and sends it to the client. This approach offloads the key generation process from the client to the server, which may be beneficial in scenarios where the client has limited computational resources.

## Claims

1. Method, preferably a computer-implemented method, for proving authenticity of a symmetric one-time signature of data of a performance-limited client (CL) towards a recipient (RE) of the data, wherein a server (SE) is consulted that shares a joint secret (sk1) with the client (CL) and wherein a public key (PK) of the one-time signature is shared among the server (SE) and the client (CL) while being integrity protected using a symmetric cryptographic algorithm based on the joint secret (sk1), wherein the server (SE) is utilized for verifying the integrity of the public key (PK) of the one-time signature using the joint secret (sk1) and wherein the server (SE) is further used for proof of the validity of the public key (PK) to the recipient (RE).

2. Method, preferably a computer-implemented method, for proving authenticity of a symmetric one-time signature of data of a performance-limited client (CL) towards a recipient (RE) of the data, wherein a joint secret (sk1) with the client (CL) is used and wherein a public key (PK) of the one-time signature is shared with the client (CL) while being integrity protected using a symmetric cryptographic algorithm based on the joint secret (sk1), and wherein the integrity of the public key (PK) of the one-time signature is verified using the joint secret (sk1) and wherein the validity of the public key (PK) is subjected to proof to the recipient (RE).

3. Method according to one of the previous claims, wherein the public key (PK) of the one-time signature is transmitted to the server (SE) and/or received by the server (SE) using a symmetric cryptographic algorithm based on the joint secret (sk1), particularly a symmetric signature.

4. Method according to one of the previous claims, wherein the public key (PK) of the one-time signature is transmitted from the server (SE) to the recipient (RE) while being integrity protected by a secure communication channel.

5. Method according to the previous claim, wherein the validity of the public key (PK) is subject to proof to the recipient (RE) by transmitting the public key (PK) to the recipient (RE) while being integrity protected with an asymmetric signature, particularly an asymmetric signature that is part of a public key infrastructure, particularly equipped with a X.509 certificate (Cert).

6. Method according to the previous claim, wherein the validity of the public key (PK) is subject to proof to the recipient (RE) by transmitting the public key (PK) to the recipient (RE) while being integrity protected using an SSH or TLS protocol.

7. Method according to one of the previous claims, wherein the public key (PK) of the one-time signature is obtained from the joint secret (sk1) particularly using a key derivation function and/or a hash-chain computation.

8. Method according to one of the previous claims, wherein the data (D) are first concatenated with the public key (PK) of the one-time signature and preferably also an identifier (SerID) of the consulted server (SE) and subsequently transmitted to the recipient (RE).

9. Method according to one of the previous claims, wherein the data (D) are additionally also concatenated with an identifier of the intended recipient (RE) before subsequently transmitting to the recipient (RE).

10. Method according to one of the previous claims, wherein the proof is requested by the recipient (RE) and/or wherein the proof is awaited by the recipient (RE).

11. Method according to one of the previous claims, wherein a computation of a hash-chain to obtain the public key (PK) of the one-time signature is done in parallel to a signing with the one-time signature (OTS).

12. Method according to one of the previous claims, wherein a key pair comprising the public key (PK) and a secret key (SK) of the one-time signature is generated by the client (CL) and/or wherein a key pair comprising the public key (PK) and a secret key (SK) of the one-time signature or a secret key (SK) of the one-time signature is generated by the server (SE) and transmitted to the client (CL).

13. Method according to one of the previous claims, wherein proof of validity of a plurality of public keys, particularly a collection and/or list of public keys, of one-time signatures to the recipient is provided.

14. Method according to one of the previous claims, wherein the method is used for proving authenticity of the symmetric one-time signature of the data of the performance-limited client towards a plurality of recipients of the data, wherein
proof of validity of the public key is provided to the plurality of recipients and wherein the proof of validity of the public key to the plurality of recipients is provided.

15. Client (CL), configured to carry out a method according to claim 1 or a claim dependent on claim 1 and/or server (SE), configured to carry out a method according to claim 2 or a claim dependent on claim 2.
